# EUROPÄISCHE PATENTSCHRIFT

(11) **EP 2 272 690 B1**
(45) Veröffentlichungstag und Bekanntmachung des Hinweises auf die Patenterteilung: **15.02.2012**
(21) Anmeldenummer: 10005220.8
(22) Anmeldetag: 19.05.2010
(51) Int. Cl.: B60C 27/18

(54) **Gleitschutzvorrichtung mit Kettfadenschutz**
Slip protection device with warp thread
Dispositif anti-glissement doté d'une protection des fils de chaînes

(30) Priorität: 10.07.2009 DE 102009032784
(43) Veröffentlichungstag der Anmeldung: 12.01.2011
(73) Patentinhaber: RUD Ketten Rieger & Dietz GmbH u. Co. KG, 73432 Aalen (DE)
(72) Erfinder: Rieger, Hansjörg, Dr., 73431 Aalen (DE); Kaiser, Helmut, 73457 Esslingen (DE)
(74) Vertreter: Rüger, Barthelt & Abel

(56) Entgegenhaltungen:
- WO-A1-2010/028724
- DE-U1-202007 018 304

## Beschreibung

Um auf Eis und Schnee den Griff von Kraftfahrzeugrädern zu erhöhen ist es bekannt Gleitschutzvorrichtungen zu verwenden. Bekannte Gleitschutzvorrichtungen bestehen aus einer textilen Laufgürtel, der die Lauffläche des Reifens umgibt. Zwei seitliche Fixiermittel sorgen dafür, dass der Laufgürtel auf der Lauffläche des Reifens bleibt.

Eine noch weitere Verbesserung der Traktion, insbesondere auf Eis, kann erreicht werden, wenn wie beim Stand der Technik einige der Fäden, die quer zum Laufgürtel liegen aus sogenannten Umwindegarn bestehen. Umwindegarn ist ein Monofilament, das mit einem Metalldraht, vorzugsweise einem Edelstahldraht, schraubenförmig umwickelt ist. Der Durchmesser des Edelstahldrahtes liegt bei ca. 0,1 mm.

Das Monofilament auf dem der Metalldraht schraubenförmig aufgewickelt ist, hat einen relativ großen Durchmesser verglichen mit den Filamenten, aus denen die Kett- und die sonstigen Schussfäden bestehen. Außerdem ist das Material relativ hartes Polyamid. Demzufolge werden die Kettfäden des Laufgürtels, die über die Schussfäden aus Umwindegarn verlaufen, schneller durchgescheuert als an anderen Stellen. Sobald ein solcher Kettfaden einmal durchgescheuert ist, reicht die Haltewirkung im übrigen Gewebe nicht aus um zu verhindern, dass sich eines der beiden nun entstandenen der Kettfädenenden allmählich von der Rissstelle entfernt und heraushängende Schlaufen bildet. Dadurch wird der Kettfaden über einen längeren Bereich lose und verliert seine Haltewirkung für die Schussfäden, womit die Zerstörung fortschreitet.

Eine Gleitschutzvorrichtung mit einem Laufgürtel aus Gewebe, wobei einige der Gewebefäden aus Umwindegarn bestehen, ist aus der nachveröffentlichten Druckschrift WO 2010/028724 A1 bekannt.

Ausgehend hiervon ist es Aufgabe der Erfindung eine neue Gleitschutzvorrichtung zu schaffen, bei der ein Wandern des Kettfadens nach dem Durchscheuern an einem aus Umwindegarn bestehenden Schussfaden vermindert oder nicht mehr gegeben ist.

Diese Aufgabe wird erfindungsgemäß mit einer Gleitschutzvorrichtung mit den Merkmalen des Anspruches 1 gelöst.

Die neue Gleitschutzvorrichtung für Kraftfahrzeugräder weist einen Laufgürtel auf, der im Gebrauchszustand die Lauffläche des Reifens umgibt. An dem Laufgürtel sind beidseits zwei Fixiermittel angebracht, die dafür sorgen, dass der Laufgürtel beim Betrieb auf der Lauffläche bleibt und nicht seitlich herunter wandert. Der Laufgürtel besteht aus einem Textil, und zwar einem doppellagigen Gewebe. Es entsteht so eine radial innen liegende Lage und eine radial außen liegende Lage. Beide Lagen sind in erster Näherung Köperbindungen, und zwar deswegen, weil die Kettfäden der beiden Lagen nicht strikt in der Lage bleiben, sondern die Lage wechseln.

Bei der neuen Gleitschutzvorrichtung sind in der äußeren Lage Schussfäden aus Umwindegarn eingebunden und werden durch die Kettfäden dieser Lage dort gehalten. Um die Kettfäden beim Aufreißen von einem Wandern in dem Laufgürtel zu schützen, sind die Kettfäden der äußeren Lage auch in erhöhtem Maße in dem Gewebe der inneren Lage mit verwebt. Aufgrund der Einbindung der Kettfäden an dieser Stelle können hier Zugkräfte aufgebaut werden, die den Kettfaden daran hindern in der Außenseite des Laufgürtels zu wandern und damit lose zu werden. Ohne Anspruch auf Vollständigkeit wird davon ausgegangen, dass bei der Traktion und dem unvermeidlichen Schlupf Längskräfte in den Kettfäden induziert werden. Solange diese Kettfäden ungerissen sind, wird die auftretende Zugkraft innerhalb des Kettfadens aufgenommen. Wenn jedoch der Kettfaden an einer Stelle reißt und sonst keine Schutzmaßnahmen bestehen, wird angenommen, dass der auftretende Schlupf den gerissenen Kettfaden allmählich entgegen der Drehrichtung aus dem Gewebe herauszieht, womit das Gewebe lose wird und damit einem schnelleren Verschleiß, ausgehend von dieser Stelle ausgesetzt ist.

Weil erfindungsgemäß die Kettfäden der äußeren Lage über mehrere Bindungsstellen auf der inneren Lage verankert sind, können hier die auftretenden Zugkräfte aufgenommen werden. Dabei wird weiter angenommen, dass die Kräfte in Umfangsrichtung, die an dem Kettfaden ziehen, im Bereich zwischen der inneren Lage und dem Reifen in der entgegengesetzten Richtung wirken wie auf der Außenseite, so dass der Transport des gerissenen Kettfadens in Umfangsrichtung des Laufgürtels durch den Reifen die Kraft zufolge des Schlupfes auf der Außenseite kompensiert und damit beide Kettfadenende auf der Außenseite entsprechend gespannt bleiben.

Zusätzlich zu der Verbindung der beiden Lagen über dem Kettfaden sind die Lagen auch noch durch Schussfäden miteinander verbunden, was insgesamt eine sehr innige Verbindung zwischen den Lagen ergibt.

Günstige Verhältnisse können sich ergeben, wenn ein Kettfaden der äußeren Lage über wenigstens drei Schussfäden in der inneren Lage mit deren Schussfäden verwoben ist.

Es kann auch sehr günstig sein, wenn ein Kettfaden der äußeren Lage über eine Strecke von wenigstens drei Schussfäden der inneren Lage mit dieser verwoben ist und der Kettfaden anschließend in die äußere Lage wechselt, wo er mit den dort vorhandenen Schussfäden verwoben ist, jedoch dort über keinen Schussfaden aus Umwindegarn auf der Außenseite der Lauffläche verläuft. Aufgrund dieser Maßnahme werden die Abstände, an denen ein Kettfaden durch das Umwindegarn durchgerieben werden kann, relativ voneinander beabstandet. Dadurch entstehen viele Bindepunkte zwischen dem gerissenen Kettfaden und den Schussfäden der äußeren und der inneren Lage, die ein allmähliches Wegziehen des gerissenen Kettfadens von der Fadstelle verhindern. Dadurch bleibt das Gewebe neben der geschädigten Stelle relativ fest und kann sich wenig lockern.

Die Kettfäden sind vorzugsweise Multifilamentfäden, die sich gut in die Zwischenräume zwischen den Umwindefäden des Umwindegarns einschmiegen.

Der Laufgürtel kann in wenigstens zwei Bereiche aufgeteilt werden, in denen sich die Bindungsart für die Kettfäden unterscheidet. In einem Streifen kann sie, wie oben erläutert ausgeführt sein, während sie im anderen Streifen regulär gestaltet ist, beispielsweise als reguläre Köperbindung.

Bezogen auf einen Kettfaden können die beiden seitlich benachbarten Kettfäden ein ähnliches oder ein abweichendes Bindungsmuster aufweisen. Darüber hinaus kann das Bindungsmuster der Nachbarfäden gegenüber dem betrachteten Kettfaden in Kettfadenrichtung verschoben sein, so dass sich für die Kettfäden unterschiedliche Verhältnisse ergeben.

Es ist auch möglich dass sich längs eines Kettfadens die Bindungsart nach Anspruch 4 oder nach Anspruch 3 miteinander abwechseln.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen plakativ vereinfacht und enthalten nicht jedes bei der praktischen Ausführung gegebenenfalls vorhandene Detail. Die Begriffe "innen" und "außen" beziehen sich auf die normale Gebrauchslage bzw. die Terminologie bei Kraftfahrzeugen.

In der Zeichnung sind Ausführungsbeispiele des Gegenstands in der Erfindung dargestellt.
- Fig. 1: zeigt ein Rad mit erfindungsgemäßen Gleit- schutzvorrichtung, mit Blick auf die Radinnen- flanke.
- Fig. 2: veranschaulicht das Rad nach Fig. 1 in einer Darstellung mit Blick auf die Radaußenseite.
- Fig. 3: zeigt in einer vergrößerten, schematisierten Darstellung einen Ausschnitt aus dem Laufgür- tel.

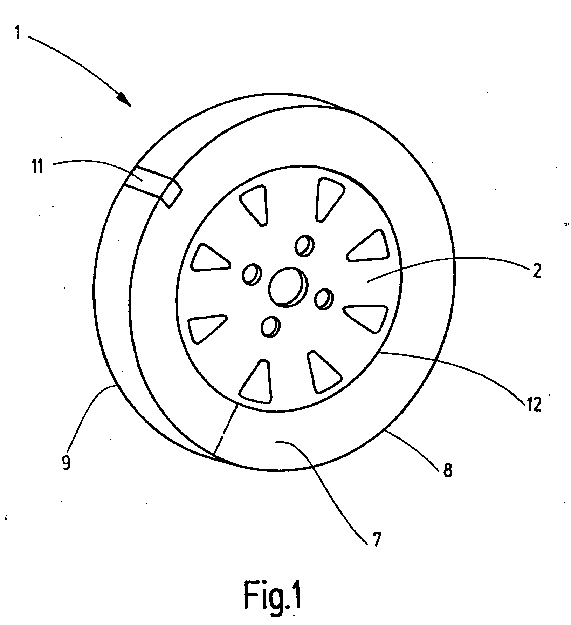

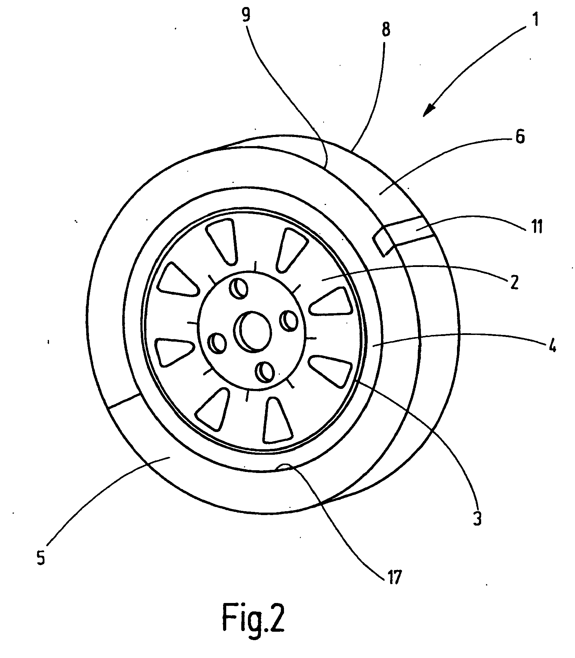

In den Figuren 1 und 2 ist ein Kraftfahrzeugrad mit einer aufgelegten Gleitschutzvorrichtung 1 dargestellt. Zu dem Kraftfahrzeugrad gehört, wie Figur 2 erkennen lässt, eine Felge 2, die radial außen an einem Felgenhorn 3 endet. Auf die Felge 2 ist ein Luftreifen 4 aufgezogen. Der Luftreifen 4 weist eine von der Gleitschutzvorrichtung 1 abgedeckte Lauffläche auf.

Die Gleitschutzvorrichtung 1 umfasst einen inneren Fixierring 5, einen Laufgürtel 6 sowie einen äußeren Fixierring 7. Der Laufgürtel 6 ist etwa so breit wie die Lauffläche des Reifens 4. Der Laufgürtel 6 endet an zwei in Umfangsrichtung parallel zueinander verlaufenden Kanten 8 und 9.

Die beiden Fixierringe 5 und 7 haben lediglich den Laufgürtel 6 daran zu hindern von der Lauffläche des Reifens herunter zu laufen. Sie brauchen keine Fliehkräfte aufzunehmen. Die Fliehkräfte werden im Laufgürtel 6 selbst ohne die Wirkung der Fixierringe 5 und 7 aufgenommen.

Der Laufgürtel 6 ist ein biegeschlaffes, textiles Flächengebilde, dass so gestaltet ist, dass es in Längsrichtung hinreichend undehnbar ist, damit es aufgrund der bei der Benutzung auftretenden Fliehkräfte nicht übermäßig gedehnt wird. Unter übermäßiger Dehnung ist hierbei eine Dehnung zu verstehen, die die Laufeigenschaften nennenswert beeinträchtigen würde.

Der Laufgürtel 6 ist an einer Stelle quer geteilt. An dieser Stelle befindet sich ein Flächenhaftverschluss 11, der ein Stück weit bis in die Fixierringe 5 und 7 hinein reicht. Der Zweck und der Aufbau eines solchen Flächenhaftverschlusses ist in der nicht vorveröffentlichten Patentanmeldung DE 10 2008 013 230.6 im einzelnen erläutert. Auf diese Patentanmeldung wird hier Bezug genommen.

Der äußere Fixierring 7 hat eine größere radiale Erstreckung als der innere Fixierring 5, da letzterer so gestaltet sein muss, dass er im Betrieb nicht mit auf der Radinnenseite vorhandenen Fahrzeugteilen, wie Spurstangenköpfen, Bremssätteln und dergleichen kollidieren kann. Er reicht deswegen vorzugsweise nicht bis zu dem Felgenhorn 3 heran.

Der äußere Fixierring 7 beginnt in radialer Richtung an der Kante 8 und reicht bis zu einer Innenkante 12. Der Fixierring 7 ist in sich dauerhaft geschlossen und er bildet somit in Umfangsrichtung gesehen ein endloses Gebilde. Er weist keinerlei Schlösser oder Verbindungselemente auf, die durch den Benutzer zu öffnen oder zu schließen wären.

Der Fixierring 7 besteht aus einem textilen Flächengebilde, in Gestalt eines bei 13 veranschaulichten Gestricks. Der Ring 7 besteht aus einem Flachgestrick, das an einer schematisch angedeuteten Naht 14 zum Ringgebilde vernäht wird.

Der innen liegende Fixierring 5 beginnt an der radial außen liegenden Kante 9, an der er mit dem Laufgürtel 6 beispielsweise vernäht ist und endet an einer radial innen liegenden Kante 17, die sich bei der gezeigten Anordnung im Abstand zu dem Felgenhorn 3 befindet. Auch der innere Fixierring 5 besteht aus einem Gestrick, wie dies bei 18 angedeutet ist. Allerdings liegen hier die Maschenstäbchen in radialer Richtung, während die Maschenreihen in Umfangsrichtung ausgerichtet sind.

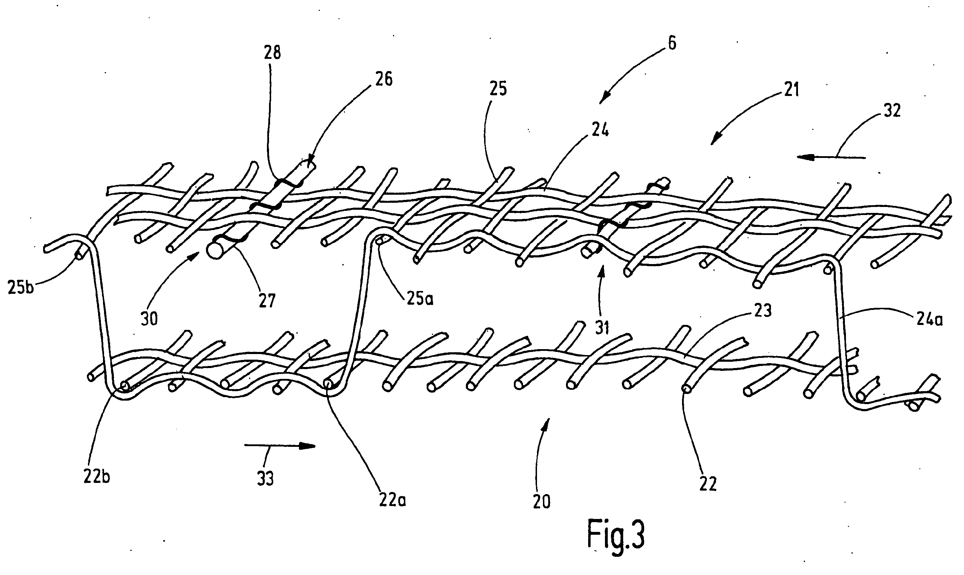

Figur 3 zeigt einen Ausschnitt aus dem Gewebe, das den Laufgürtel 6 bildet. Diese Darstellung ist stark vereinfacht und plakativ, denn sie soll nur das Wesentliche veranschaulichen.

Der Laufgürtel 6 besteht aus einem doppellagigem Gewebe. Das Gewebe bildet eine radial innen liegende Lage 20 und eine radial außen liegende Lage 21. Mit radial innen liegend ist jene Lage bezeichnet, die der Radachse näher liegt und mit der Lauffläche des Reifens in Kontakt steht. Die radial äußere Lage 21 liegt von der Radachse entfernt und steht im Betrieb mit der Fahrbahn in Berührung.

Die Grundbindung der radial inneren Lage 20 ist eine Leinwand- oder Köperbindung mit Schussfäden 22 und Kettfäden 23. Die Kettfäden 23 liegen in Umfangsrichtung des Rads 1 und damit in Fahrrichtung, während die Schussfäden 22 parallel zur Radachse ausgerichtet sind. Die Kettfäden und die Schussfäden 23, 22 bestehen aus einem Multifilamentgarn zwischen 600 dtex und 2200 dtex.

Die radial äußere Lage 21 ist vom Grundaufbau her ebenfalls eine Leinwandbindung, wiederum mit Kettfäden 24 und Schussfäden 25. Die Kettfäden 24 liegen ebenfalls in Umfangsrichtung und somit parallel zur Bewegungsrichtung, während die Schussfäden 25 quer dazu ausgerichtet sind.

Im Unterschied zu der inneren Lage 20 enthält die äußere Lage 21 in vorgegebenen Abständen Schussfäden 26 aus Umwindegarn, d.h. einem Garn aus einem Monofilament 27 als Seele um das schraubenförmig ein Monofilament 28 herum gebunden ist. Das Monofilament 28 ist ein Edelstahldraht mit einem Durchmesser zwischen 0,05 mm und 0,5 mm. Die Seele 27 des Umwindegarns 26 hat einen Nenndurchmesser zwischen 0,2 mm und 1,0 mm und besteht aus einem harten Polyamid. Gemäß der Darstellung ist jeder siebente Schussfaden ein Schussfaden aus einem Umwindegarn 26.

Die übrigen Schussfäden 25 sowie die Kettfäden 24 sind Multifilamentgarne mit den gleichen Parametern wie die Garne für die innere Lage 20.

Bei dem gezeigten Ausführungsbeispiel besteht jedes siebente Schussfaden aus Umwindegarn 26.

Die beiden Lagen 20 und 21 sind im Übrigen in der bekannten Weise durch Schussfäden miteinander verbunden. Dies geschieht, indem ein Schussfaden beim Weben in seinem Verlauf durch das Fach der unteren Lage und das Fach der oberen Lage hindurch gewebt wird. Diese Schussfäden, die zwischen der oberen und der unteren Lage wechseln, sind aus Übersichtlichkeitsgründen in Fig. 3 nicht gezeigt, da es hier auf diesen Effekt nicht ankommt.

Aufgrund der plakativen Darstellung sind auch die aus Mulifilamentgarn hergestellten Fäden zylindrisch gezeigt, was die wahren Verhältnisse verschleiert. Tatsächlich werden die Filamentgarne im Bereich der Überkreuzungen flach gedrückt, so insbesondere auch an jenen Stellen an denen Kettgarne die Umwindegarne 26 kreuzen. Dabei kommt die Situation vor, dass der Kettfaden, wie an der Kreuzungsstelle 30, zwischen den Windungen des Umwindefadens 28 liegt, während er beispielsweise an der Stelle 31 über den Umwindefaden 28 herumläuft. Er wird deswegen an dieser Stelle bevorzugt durchgescheuert werden und reißen.

Um die schädigende Auswirkung eines solchen Risses zu begrenzen, wechseln die Kettfäden 24, wie dies für den Kettfaden 24a gezeigt ist, periodisch zwischen der äußeren Lage 21 und der inneren Lage 20 hin und her. Dadurch wird zweierlei erreicht. Erstens werden hierdurch die beiden Lagen miteinander verbunden und außerdem wird die schädigende Auswirkung eines Fadenbruchs oder -risses beschränkt.

Der betrachtete Schussfaden 24a liegt jedoch nicht nur in der Lage 21 sondern verschwindet nach der Umschlingung des Schussfadens 25a in Richtung auf die innere Lage 20, wo er um den Schussfaden 22a herumführt. Von dort ist er über mehrere Schussfäden 22 bis zum Schussfaden 22b in der unteren Lage 20 zwischen den dort vorhandenen Kettfäden 23 verwoben. Nach dem Umlaufen des Schussfadens 22 wechselt der Kettfaden 24 wieder in die obere Lage 21 und läuft dort um den Schussfaden 25b herum, ab dem er wieder normal in der oberen Lage verwebt ist. Wegen der Wechsel der Kettfäden zwischen den Lagen ist die Bindung auch streng genommen keine Leinwandbindung sondern eine Köperbindung, was jedoch für die weitere Betrachtung keine Bedeutung hat.

Der Kettfaden 24a ist beispielhaft gezeigt. Weitere oder alle übrigen Kettfäden 24 der oberen Lage 21 zeigen der gleich prinzipiellen Verlauf, jedoch ist deren Bindungsmuster gegebenenfalls gegenüber dem Kettfaden 24a verschoben. Würden alle Kettfäden 24 in ihrem tatsächlichen Verlauf gezeigt werden, wäre die Darstellung unübersichtlich und unverständlich. Ferner braucht der Kettfaden 24a nicht nach jeder Überkreuzung eines Umwindegarns in die innere Lage 20 abtauchen. Der Wechsel kann auch nach mehreren Überkreuzungen stattfinden. Schließlich ist es denkbar, dass das gezeigte Bindungsmuster auf Streifen beschränk ist, die in Umfangsrichtung liegen.

Für die weitere Betrachtung sei angenommen, das bei der Benutzung der Gleitschutzvorrichtung 1 an der radial äußeren Lage eine Schlupfkraft in Richtung eines Pfeiles 32 auftritt. Diese Schlupfkraft ist eine Schlupfkraft zwischen der Gleitvorrichtung 1 und der Straßenoberfläche. Dabei soll unter Schlupfkraft jene Kraft verstanden sein, die in Tangentialrichtung wirkt und aufgrund des Schlupfes zwischen Laufgürtel und Reifen einerseits und Laufgürtel und Straße andererseits entsteht.

Dementsprechend entsteht an der radial inneren Lage 20 eine Schlupfkraft in Richtung eines Pfeiles 33, d.h. eine Schlupfkraft, die der Schlupfkraft 32 entgegen gerichtet ist. Wenn nun der betrachtete Faden 24a an der Stelle 31 durchgescheuert wird, entstehen zwei freie Fadenenden, nämlich ein bezogen auf Fig. 3 linkes Fadenende und ein rechtes Fadenende. Das Fadenende das rechts von der Stelle 31 liegt, wird durch die Schlupfkraft 32 naturgemäß gespannt gehalten, weil die Schlupfkraft an dem Kettfaden 24a zieht und bestrebt ist das freie Ende zu der Stelle 31 zurück zu ziehen. Anders ergeht es dem Ende des Kettfadens 24a, das links von der Stelle 31 liegt. Dieses Ende wird an den Stellen, an denen es auf der Außenseite liegt von der Schlupfkraft 32 nach links verschoben. Mit anderen Worten, der Kettfaden 24a links von der Bruchstelle wird durch die Schlupfkraft in Richtung des Pfeiles 32 gestaucht. Er ist deswegen bestrebt allmählich nach links zwischen den Schussfäden 23 hindurch weg zu wandern. Ohne weitere Maßnahme würde sich der Schussfaden 24a zunehmend lockern und dadurch freie Schlaufen bilden, die vorzeitig verschleißen. Von nun an würde die Struktur beschleunigt zerstört werden.

Da der gerissene Kettfaden 24a ab dem Schussfaden 25a in die innere Lage 20 wechselt verschwindet ab dort die Wirkung der auf der Außenseite angreifenden Schlupfkraft in Richtung des Pfeiles 32. Statt dessen unterliegt nun ab dem Schussfaden 22a, beginnend nach links, der Schussfaden 24a der Kraft entsprechend der Schlupfkraft des Pfeiles 33, die von links nach rechts wirkt. Das Zusammenspiel zwischen der Reifenoberfläche und der inneren Seite des Laufgürtels 2 sorgt nun dafür, dass der Kettfaden 24a ab dieser Stelle wieder gespannt gehalten wird. Auch nach dem Rückwechseln in die obere oder äußere Lage 21 nach dem Umwinden des Schussfadens 25b kann die dort vorhandene Schlupfkraft den Kettfaden 24a nicht weiter stauchen, weil er im Bereich der inneren Lage 20 in der beschriebenen Weise gespannt gehalten wird. Die zwischen den Schussfäden 22b und 22a wirkende Schlupfkraft kompensiert jene Schlupfkraft, die auf dem gebrochenen Faden 24a einwirkt, die links von dem Schussfaden 25b entsteht.

Umgekehrt würde die Schlupfkraft in Richtung des Pfeils 33 auf das rechte Ende des gebrochenen Kettfadens 24 einen ungünstigen Einfluss ab dem Punkt haben, ab dem der Kettfaden 24a aus der äußeren Lage 21 in die innere Lage 20 wechselt. Die Kräfte die hier auftreten dürfen wiederrum auch nicht größer sein als diejenigen Kräfte, die in der äußeren Lage 21 von rechts nach links wirken um den Faden gespannt zu halten. Aus diesem Grund kann es zweckmäßig sein, wenn die Zahl der Schussfäden, mit denen der Kettfaden 24a in der unteren Lage 20 verwoben ist, ehe er wieder zurück in die obere Lage 21 wechselt, etwa gleich groß ist, wie die Anzahl der Schussfäden mit denen der Faden 24a in der oberen Lage 21 zwischen dem Umwindegarn 26 und dem letzten Schussfaden 25a verwoben ist.

Abgesehen von diesem Mitnahmeeffekt durch Schlupf sorgt natürlich auch das Verweben des gebrochenen Schussfadens 24a in der inneren Lage 20 an sich bereits für eine stärkere Verankerung und einem Halteeffekt unabhängig von den auftretenden Schlupfkräften.

Zusätzlich zu den gezeigten Maßnahmen zur Verankerung der Kettfäden 24 und deren Sicherung gegen weiteres Auftrieseln sind keine weiteren Sicherungsmaßnahmen vorgesehen. Insbesondere ist nicht vorgesehen, das Gewebe an bestimmten Kreuzungspunkten beispielsweise zu bonden.

Über wie viele Schussfäden ein Kettfaden in der äußeren Lage verläuft und dann in die innere Lage wechselt, und mit wie vielen Schussfäden er dort verwoben ist, ehe er in die äußere Lage zurückkehrt, ist eine Frage der empirischen Werte. Es muss ein Kompromiss gefunden werden zwischen hinreichender Fadendichte in der äußeren Lage 21 und einer hinreichenden Verankerung gegebenenfalls gerissener Kettfäden. Es ist dabei zu berücksichtigen, dass an jenen Stellen, an denen ein Kettfaden aus der oberen Lage 21 die untere Lage 20 wechselt, die äußere oder obere Lage 21 dünner wird, während die Kettfadendichte in der unteren Lage zunimmt. Dadurch wird das Gewebe der Lage 20 fester, während das Gewebe der Lage 21 lockerer wird.

In jedem Falle ist es zweckmäßig, wenn ein Kettfaden, nachdem er einen Schussfaden aus Umwindegarn 26 auf der Außenseite gekreuzt hat zunächst einmal in die innere Lage 20 wechselt. Bei Kettfäden, die an der Kreuzungsstelle nicht auf der exponierten Seite verlaufen, braucht diese Bedingung nicht eingehalten zu werden, weil hier das Risiko des Fadenbruchs klein ist. Es kann der Kettfaden an dieser Stelle bis zur Überkreuzung auf der exponierten Seite des benachbarten Schussfadens in der äußeren Lage 21 verbleiben.

Eine Gleitschutzvorrichtung für Kraftfahrzeuge weist einen Laufgürtel auf, der aus einem doppellagigen Gewebe besteht. Zum Schutz der Kettfäden der äußeren Gewebelage gegen Lockern nach einem Fadenriss wechselt ein betrachteter Kettfaden nach einer oder mehreren Überkreuzungen eines oder mehrerer Schussfäden aus Umwindegarn in die radial innere Lage, um dort verankert zu werden.

## Patentansprüche

1. Gleitschutzvorrichtung (1) für Kraftfahrzeugräder,
die eine Radinnenseite, eine Radaußenseite und eine Lauffläche aufweisen,
mit einem ersten Fixiermittel (5), das bei montierter Gleitschutzvorrichtung (1) an der Radinnenseite angeordnet ist,
mit einem zweiten Fixiermittel (7), das bei montierter Gleitschutzvorrichtung (1) an der Radaußenseite angeordnet ist,
mit einem Laufgürtel (6), der bei montierter Gleitschutzvorrichtung (1) auf der Lauffläche liegt, der eine Kontaktfläche zur Straße bildet und zwei seitliche Längskanten (8,9) aufweist, von denen die eine mit dem ersten Fixiermittel (5) und die andere Kante mit dem zweiten Fixiermittel (7) verbunden ist,
wobei der Laufgürtel (6) ein doppellagiges Gewebe mit einer radial äußeren Lage (21) und einer radial inneren Lage (20) ist,
wobei die Kettfäden (23,24) der beiden Lagen (20,21) in Umfangsrichtung verlaufen,
wobei die Schussfäden (25) der äußeren Lage (21) sowohl normale Fäden als auch mit Draht umwundene Fäden (26) sind
wobei die Kettfäden (24) der äußeren Lage (21) abschnittsweise mit den Schussfäden (22) der inneren Lage (20) verwoben sind, und
wobei die Schussfäden (25) der äußeren Lage (21) abschnittsweise als Schussfaden (22) in der inneren Lage (20) eingewoben sind.

2. Gleitschutzvorrichtung nach Anspruch 1, **dadurch gekennzeichnet, dass** umwundene Schussfäden (26) zwischen 3 und 20 Schussfäden (25) aus normalen nicht umwundenen Fäden liegen.

3. Gleitschutzvorrichtung nach Anspruch 1, **dadurch gekennzeichnet, dass** die umwundenen Fäden (26) von einem Monofilament (27) gebildet sind, dass mit einem Draht (28) schraubenförmig umwunden ist.

4. Gleitschutzvorrichtung nach Anspruch 1, **dadurch gekennzeichnet, dass** ein Kettfaden (24) der äußeren Lage (21) über wenigstens drei Schussfäden (25) in der inneren Lage (20) mit diesen Schussfäden (22) verwoben ist.

5. Gleitschutzvorrichtung nach Anspruch 1, **dadurch gekennzeichnet, dass** ein Kettfaden (24a) der äußeren Lage (21) über eine Strecke von wenigstens drei Schussfäden (22) der inneren Lage (20) mit dieser verwoben ist und dass der Kettfaden (24a) anschließend mit den Schussfäden (25) der äußeren Lage (21) verwoben ist, wobei er jedoch bis zum nächsten Wechsel auf die innere Lage (20) keinen Schussfaden (26) aus Umwindegarn auf der Außenseite des Laufgürtels (1) kreuzt.

6. Gleitschutzvorrichtung nach Anspruch 1, **dadurch gekennzeichnet, dass** die Kettfäden (23,24) Multifilamentfäden sind.

7. Gleitschutzvorrichtung nach Anspruch 1, **dadurch gekennzeichnet, dass** die nicht umwundenen Fäden (22,23,24,25) Multifilamentfäden sind.

8. Gleitschutzvorrichtung nach Anspruch 1, **dadurch gekennzeichnet, dass** die Lauffläche bezogen auf die Breite in wenigstens zwei Streifen aufgeteilt ist, wobei die Einbindung der Kettfäden in den Streifen unterschiedlich gestaltet ist.

9. Gleitschutzvorrichtung nach Anspruch 1, **dadurch gekennzeichnet, dass** bezogen auf einen betrachteten Kettfaden die beiden unmittelbar benachbarten Kettfäden dasselbe Bindungsmuster aufweisen, jedoch deren Bindungsmuster gegenüber dem Bindungsmuster des betrachteten Kettfadens um mehrere Schussfäden in Umfangsrichtung versetzt ist.

10. Gleitschutzvorrichtung nach Anspruch 1, **dadurch gekennzeichnet, dass** bei einem betrachteten Kettfaden die Bindungsart nach Anspruch 2 mit der Bindungsart nach Anspruch 3 abwechselt.

## Claims

1. Slide prevention device (1) for motor vehicle wheels that have a wheel inner surface, a wheel outer surface and a running surface,
with a first fastening element (5), which is arranged on the wheel inner surface when the slide prevention device (1) is mounted,
with a second fastening element (7), which is arranged on the wheel outer surface when the slide prevention device (1) is mounted,
with a running belt (6), which lies on the running surface when the slide prevention device (1) is mounted, which forms a contact surface to the road and has two lateral longitudinal edges (8, 9), of which one is connected to the first fastening element (5) and the other edge is connected to the second fastening element (7),
wherein the running belt (6) is a double-layered woven fabric with a radially outer layer (21) and a radially inner layer (20),
wherein the warp threads (23, 24) of the two layers (20, 21) run in the peripheral direction,
wherein the weft threads (25) of the outer layer (21) are both normal threads and threads wrapped with wire,
wherein in sections the warp threads (24) of the outer layer (21) are woven with the weft threads (22) of the inner layer (20), and
wherein in sections the weft threads (25) of the outer layer (21) are woven as weft thread (22) into the inner layer (20).

2. Slide prevention device according to claim 1, **characterised in that** wrapped weft threads (26) lie between 3 and 20 weft threads (25) consisting of normal non-wrapped threads.

3. Slide prevention device according to claim 1, **characterised in that** the wrapped threads (26) are formed by a monofilament (27), which is wrapped with a wire (28) in a spiral shape.

4. Slide prevention device according to claim 1, **characterised in that** over at least three weft threads (25) in the inner layer (20) a warp thread (24) of the outer layer (21) is wrapped with these weft threads (22).

5. Slide prevention device according to claim 1, **characterised in that** over a distance of at least three weft threads (22) of the inner layer (20) a warp thread (24a) of the outer layer (21) is wrapped with this, and that the warp thread (24a) is then wrapped with the weft threads (25) of the outer layer (21), wherein it does not, however, intersect any weft thread (26) consisting of wrapping yam on the outer surface of the running belt (1) until the next change to the inner layer (20).

6. Slide prevention device according to claim 1, **characterised in that** the warp threads (23, 24) are multifilament threads.

7. Slide prevention device according to claim 1, **characterised in that** the non-wrapped threads (22, 23, 24, 25) are multifilament threads.

8. Slide prevention device according to claim 1, **characterised in that** the running surface is divided into at least two strips with respect to the width, wherein the warp threads are tied into the strips in a different configuration.

9. Slide prevention device according to claim 1, **characterised in that** with respect to one viewed warp thread the two directly adjacent warp threads have the same weave pattern, whereas their weave pattern is displaced in the peripheral direction by several weft threads in relation to the weave pattern of the viewed warp thread.

10. Slide prevention device according to claim 1, **characterised in that** in the case of a viewed warp thread the weave structure according to claim 2 alternates with the weave structure according to claim 3.

## Revendications

1. Dispositif anti-glissement (1) pour roues de véhicules automobiles qui présentent une face de roue intérieure, une face de roue extérieure et une bande de roulement,
comprenant un premier moyen de fixation (5) qui, lorsque le dispositif anti-glissement (1) est monté, est placé sur la face de roue intérieure,
comprenant un deuxième moyen de fixation (7) qui, lorsque le dispositif anti-glissement (1) est monté, est placé sur la face de roue extérieure,
comprenant une ceinture de roulement (6) qui, lorsque le dispositif anti-glissement (1) est monté, est appliquée contre la bande de roulement et forme une surface de contact avec la chaussée et présente deux bords longitudinaux (8, 9) latéraux dont un est relié au premier moyen de fixation (5) et l'autre bord est relié au deuxième moyen de fixation (7),
la ceinture de roulement (6) étant un tissu à deux couches, avec une couche (21) radialement extérieure et une couche (20) radialement intérieure,
les fils de chaîne (23, 24) des deux couches (20, 21) s'étendant dans la direction circonférentielle,
les fils de trame (25) de la couche extérieure (21) étant aussi bien des fils normaux que des fils (26) autour desquels est enroulé du fil métallique,
les fils de chaîne (24) de la couche extérieure (21) étant par portions tissés avec les fils de trame (22) de la couche intérieure (20), et
les fils de trame (25) de la couche extérieure (21) étant tissés par portions en tant que fil de trame (22) dans la couche intérieure (20).

2. Dispositif anti-glissement selon la revendication 1, **caractérisé en ce que** des fils de trame entourés (26) se trouvent entre 3 et 20 fils de trame (25) constitués de fils normaux, non entourés.

3. Dispositif anti-glissement selon la revendication 1, **caractérisé en ce que** les fils entourés (26) sont constitués d'un monofilament (27) autour duquel un fil métallique (28) est enroulé sous une forme hélicoïdale.

4. Dispositif anti-glissement selon la revendication 1, **caractérisé en ce qu'**un fil de chaîne (24) de la couche extérieure (21) est tissé, sur au moins trois fils de trame (22), dans la couche intérieure (20), avec ces fils de trame (22).

5. Dispositif anti-glissement selon la revendication 1, **caractérisé en ce qu'**un fil de chaîne (24a) de la couche extérieure (21) est tissé avec la couche intérieure (20), sur une portion d'au moins trois fils de trame (22) de celle-ci, et **en ce que** le fil de chaîne (24a) est ensuite tissé avec les fils de trame (25) de la couche extérieure (21), sans qu'il ne croise toutefois, jusqu'au passage suivant à la couche intérieure (20), de fils de trame (26) en fil entouré, sur la face extérieure de la ceinture de roulement (6).

6. Dispositif anti-glissement selon la revendication 1, **caractérisé en ce que** les fils de chaîne (23, 24) sont des fils multifilaments.

7. Dispositif anti-glissement selon la revendication 1, **caractérisé en ce que** les fils (22, 23, 24, 25) non entourés sont des fils multifilaments.

8. Dispositif anti-glissement selon la revendication 1, **caractérisé en ce que** la bande de roulement, rapporté à la largeur, est divisée en au moins deux bandes, le liage des fils de chaîne dans la bande étant réalisé de différentes manières.

9. Dispositif anti-glissement selon la revendication 1, **caractérisé en ce que**, rapporté à un fil de chaîne considéré, les deux fils de chaîne directement adjacents présentent le même dessin d'armure, mais que leur dessin d'armure est décalé de plusieurs fils de trame dans la direction circonférentielle, par rapport au dessin d'armure du fil de chaîne considéré.

10. Dispositif anti-glissement selon la revendication 1, **caractérisé en ce que** pour un fil de chaîne considéré, le type d'armure selon la revendication 2 alterne avec le type d'armure selon la revendication 3.
